# EUROPEAN PATENT SPECIFICATION

(11) **EP 1 173 262 B1**
(45) Date of publication and mention of the grant of the patent: **29.12.2004**
(21) Application number: 00920875.2
(22) Date of filing: 20.04.2000
(51) Int. Cl.: A63F 13/12

(54) **IMPROVED COMPETITION METHOD AND MEANS**
VERBESSERTE WETTKAMPFMETHODE UND VORRICHTUNG
PROCEDE ET SYSTEME DE COMPETITION AMELIORES

(30) Priority: 28.04.1999 GB 9909649
(43) Date of publication of application: 23.01.2002
(73) Proprietor: Constantine, William Robert, Teeside TS23 3TH (GB)
(72) Inventor: Constantine, William Robert, Teeside TS23 3TH (GB)
(74) Representative: Goodwin, Mark
(86) International application number: PCT/GB2000/001466
(87) International publication number: WO 2000/066237

(56) References cited:
- WO-A-98/46029
- WO-A-98/52663
- GB-A- 2 271 262
- US-A- 5 800 268
- PATENT ABSTRACTS OF JAPAN vol. 1999, no. 01, 29 January 1999 (1999-01-29) & JP 10 271562 A (TAITO CORP), 9 October 1998 (1998-10-09)
- PATENT ABSTRACTS OF JAPAN vol. 018, no. 495 (C-1250), 16 September 1994 (1994-09-16) & JP 06 165879 A (SEGA ENTERP LTD), 14 June 1994 (1994-06-14)

## Description

The present invention is an improved method and means for conducting a competition of the type wherein the competitor attempts to identify the position on a pictorial display from which position an object has in fact or notionally been omitted.

Competitions of the foregoing general type are well exemplified by those described as "Spot-the-Ball" competitions. These are competitions wherein an entrant is presented with a picture of a football or other ball game in progress in which picture the ball is not seen. The image of the ball may have previously been deleted from the picture or the picture may be of an artificial situation which did not include a ball. The competitor, by one means or another, for example by applying a cross to the picture, attempts to identify the position of the omitted ball.

The long-standing method of entering such competitions has been for the entrant to mark one or more crosses upon the entry coupon by hand and then to submit his entry by post, the result of the competition being declared several days later. However competitions of other types, for example lottery and scratch-card competitions, tend increasingly to give instant results and therefore competitors in all competitions are less willing to wait for several days to discover whether or not their entry is successful.

With the foregoing consideration in mind, methods have been devised of adapting competitions of the Spot-the-Ball type to forms enabling the success or otherwise of the entrant to be established very quickly and often instantly. Such modified competitions, and apparatus for conducting and entering competitions of the modified type, are described in my International Patent Specification No W098/52663. In that specification I have described a competition in which the pictorial display from which an object is omitted has been received from a remote location and the competitor superimposes the selected spot for his competition entry on the display electronically, for example by manual means. I have also described therein various forms of apparatus for conducting such a competition.

Patent Abstracts of Japan, Vol. 1999, No 1 includes an abstract of Japanese Patent Publication No 10271562, which abstract describes a portable terminal devised to permit the playing of a variety of games by down-loading to the terminal from a remote database the software for each game as that specific game is to be played. Thus the portable terminal must, for each chosen game, receive and down-load the software for that specific game.

In contrast to that latter approach of transferring the whole of the software for a given game, I have now devised a form of my foregoing competition by means of which a competitor may enter the competition from almost any desired location, without the necessity of transferring the whole of the relevant software.

The method according to the present invention for conducting a pictorial competition comprises transmitting the picture from a remote location to a unit which comprises a telephone, a display screen and manual means for entering electronically upon the display screen an indication of a selected position or positions upon the screen, and comparing the selected position or positions with a predetermined position.

By virtue of the method according to the present invention, a competitor with the defined unit may be able to display the competition entry picture at any time and at any place where he is able to receive the necessary transmission, and may then enter the competition by indicating on the screen the position or positions selected as his entry, and, in many cases immediately, discover whether or not his entry is successful.

The picture is transmitted to the competitor's unit from a remote location by any available means which transmits a signal receivable by that unit. Thus the picture may be transmitted by fixed transmission lines to which the unit is connected; for example the picture may be received via the Internet. As one preferred alternative, the picture may be transmitted by radio or by a satellite-dish route. In one form of the invention, the display may be conveyed to the screen by means of fibre optics or may be transmitted digitally.

The picture, received by the competitor from its remote location, may be displayed in any of a variety of visual forms. For example, the display may be a 3-dimensional display when the unit has the facility, as with certain telephone hand-sets, to display an image in three dimensions. As another possibility, the received picture may be displayed as a virtual reality image or as a holographic image, or indeed in any form which the competitors unit is able to display.

The transmitted picture, whatever its form, may be a static or moving picture. For example, it may be a live or recorded picture showing competitors, such as footballers, actually competing in a game but with the ball removed, for example electronically, from the display. By way of example, the ball may be removed electronically from an image which continues to run on for a short time, for example a few seconds, before the image is halted and the competitor indicates his selected position(s).

Thus the unit required by the intending competitor comprises a telephone, a display screen and the electronic means of indicating his selected entry position(s) on the display. The unit may be a mobile or portable unit or a fixed unit comprising the specified components. However the invention has the particular advantage that, with an appropriate mobile unit, the competitor may enter the competition from a remote or mobile location, for example in the open countryside or while travelling. To that end, it may be preferred to use a mobile telephone, linked by radio to the source of the competition. Nonetheless, the advantage of an immediate result may also be achieved if the unit including the telephone is linked by conventional telephone land-line to the competition source.

The unit also includes the specified display screen. In one form of the invention, the display may be seen upon a conventional screen of the television type. However the particular advantage of being able to enter the competition from a wide range of locations is best achieved when the unit incorporates the display screen in the telephone unit itself, in particular in the telephone hand-set. Mobile telephone hand-sets incorporating such a visual display are increasingly becoming available, in particular at a price acceptable to the general public, and may therefore be ideal for the present purpose.

A third feature of the required unit is that it must have means for entering upon the screen an indication of the position or positions selected by the competitor. When the unit is not intended for mobile use, the entry means may comprise a full QWERTY or similar alphabetic keyboard. However, in particular when the unit is intended for mobile use, then the entry means may comprise a numerical keyboard and/or one or more buttons controlling a symbol seen upon the screen. As a further alternative, the entry means may comprise a touch-sensitive screen.

Thus, by way of example, the unit according to the present invention may be installed in a car or other vehicle, wherein is a portable or mobile telephone receiver with an associated display screen and the electronic means, for example a touch-sensitive display, to enable the competitor to indicate his selected position(s) upon the screen.

A major advantage of the method according to the invention is that it enables a competitor to enter a competition at any time and from a wide range of locations. However, it is highly desirable for the competitor further to be able to see immediately the success or otherwise of his entry. To that end, the comparing of the position(s) selected by the competitor with the predetermined position representing a winning entry is preferably carried out automatically, either within the competitor's unit or at the remote location from which the competition picture is transmitted. Either way, an indication of the success and/or failure of the entry is preferably provided at the competitor's unit. For example, the indication may be a visual and/or audible indication. Preferably also, a new competition is set, either manually by the organiser of the competition or more preferably automatically, as soon as possible after an entry has proved to be successful.

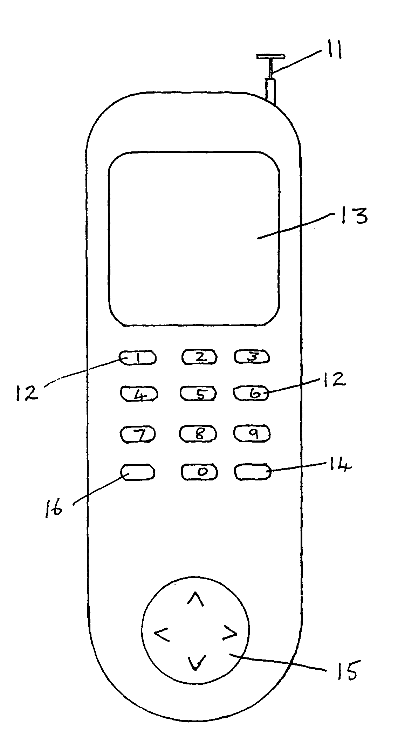

The invention will now be further described and illustrated, by way of example only, with reference to the accompanying drawing, which illustrates, in elevation from the front, one form of hand-set adapted to be used by a competitor taking part in a competition conducted by the method according to the present invention.

The illustrated hand-set 10 is a telephone unit designed to transmit and receive signals via a retractable radio aerial 11. By means of numbered push-buttons 12, the unit may be used to dial and send telephone messages in the same way as any conventional mobile phone unit. However the hand-set also incorporates a screen 13, upon which a received radio-transmitted picture may be displayed by pressing a push-button 14.

The picture displayed on the screen 13 may, by way of example, be a picture or representation of a football match, with the ball itself omitted from the display. In order to enter the competition, the competitor is required to identify a position on the display which he believes to be the position of the omitted ball. He selects and indicates that position by movement of the control button 15 and, having selected his position, makes his entry by pressing an entry button 16.

If the competitor has chosen the correct position of the omitted ball, a characteristic winning sound or sequence of sounds is emitted from the unit. A prize payment may be credited against an account identified by the telephone hand-set number or may be despatched to the address of the telephone user.

When a prize has been won in this way, a new picture becomes available for display on the screen 13 when required.

## Claims

1. A method for conducting a pictorial competition, which method comprises transmitting the picture from a remote location to a unit which comprises a telephone, a display screen and manual means for entering electronically upon the display screen an indication of a selected position or positions upon the screen, and comparing the selected position or positions with a predetermined position.

2. A method as claimed in Claim 1, wherein the picture is transmitted to the unit by fixed transmission lines to which the unit is connected.

3. A method as claimed in Claim 2, wherein the picture is transmitted to the unit via the Internet.

4. A method as claimed in Claim 1, wherein the picture is transmitted by radio or via a satellite dish.

5. A method as claimed in Claim 1, wherein the picture is conveyed to the screen by means of fibre optics or is transmitted digitally.

6. A method as claimed in any of the preceding claims, wherein the display is a 3-dimensional display.

7. A method as claimed in any of Claims 1 to 5, wherein the display is a virtual reality image or a holographic image.

8. A method as claimed in any of the preceding claims, wherein the transmitted picture is a moving picture.

9. Apparatus for participating in a pictorial competition as claimed in any of the preceding claims, which apparatus comprises a telephone, a display screen and electronic means for indicating a selected entry position or positions on the display.

10. Apparatus as claimed in Claim 9, wherein the telephone and the electronic means for indicating a selected entry position or positions are combined in a single unit.

11. Apparatus as claimed in Claim 10, wherein said single unit also incorporates said display screen.

12. Apparatus as claimed in Claim 10 or Claim 11, wherein said single unit is a mobile telephone unit, adapted to be linked by telephone land-line to the competition source.

13. Apparatus as claimed in Claim 10 or Claim 11, wherein said single unit is a mobile telephone unit, adapted to be linked by radio to the competition source.

14. Apparatus as claimed in any of Claims 9 to 13, wherein said electronic means for indicating a selected entry position or positions comprises a QWERTY or other alphabetic keyboard.

15. Apparatus as claimed in any of Claims 9 to 13, wherein said electronic means for indicating a selected entry position or positions comprises a numerical keyboard and/or one or more buttons controlling a symbol seen upon the screen.

16. Apparatus as claimed in any of Claims 9 to 13, wherein said electronic means for indicating a selected entry position or positions comprises a touch-sensitive screen.

17. Apparatus as claimed in any of Claims 9 to 16, installed in a car or other vehicle.

18. Apparatus as claimed in any of Claims 9 to 17, having means to carry out automatically the comparing of the entry position(s) selected on the display with a predetermined position representing a winning entry.

19. Apparatus as claimed in any of Claims 9 to 18, having means to indicate the success and/or failure of a competitor's entry.

20. Apparatus as claimed in Claim 19, wherein said means to indicate said success and/or failure gives a visual and/or audible said indication.

21. Apparatus as claimed in any of Claims 9 to 20, including means to set a new competition after an entry has proved to be successful.

## Patentansprüche

1. Verfahren zum Durchführen eines Bild-Gewinnspiels, welches Verfahren eine Übertragung des Bildes von einer Fernübertragungs-Stelle an eine Einheit, die ein Telefon, einen Anzeigeschirm und eine manuelle Eingabeeinheit zum elektronischen Eingeben einer Anzeige einer gewählten Position oder Positionen auf dem Anzeigeschirm aufweist, und ein Vergleichen der gewählten Position oder der Positionen mit einer vorbestimmten Position umfasst.

2. Verfahren nach Anspruch 1,
wobei das Bild an die Einheit durch stationäre Übertragungsleitungen übertragen wird, an die die Einheit angeschlossen ist.

3. Verfahren nach Anspruch 2,
wobei das Bild an die Einheit über das Internet übertragen wird.

4. Verfahren nach Anspruch 1,
wobei das Bild über einen Funksender oder über eine Satellitenantenne übertragen wird.

5. Verfahren nach Anspruch 1,
wobei das Bild mittels Faseroptiken auf den Schirm gebracht wird oder digital übertragen wird.

6. Verfahren nach einem der vorangehenden Ansprüche,
wobei die Anzeige eine dreidimensionale Anzeige ist.

7. Verfahren nach einem der Ansprüche 1 bis 5,
wobei die Anzeige ein virtuelles Realbild oder ein Holographie-Bild ist.

8. Verfahren nach einem der vorangehenden Ansprüche,
wobei das übertragene Bild ein bewegtes Bild ist.

9. Vorrichtung als Bestandteil zum Durchführen eines Bild-Gewinnspiels gemäß einem der vorangehenden Ansprüche, welche Vorrichtung ein Telefon, einen Anzeigeschirm und eine elektronische Einheit zum Anzeigen einer gewählten Eintrags-Position oder -Positionen auf der Anzeige aufweist.

10. Vorrichtung nach Anspruch 9,
wobei das Telefon und die elektronische Einheit zum Anzeigen einer gewählten Eintrags-Position oder -Positionen in einer einzelnen Einheit kombiniert sind.

11. Vorrichtung nach Anspruch 10,
wobei in der einzelnen Einheit auch der Anzeigenschirm umfasst ist.

12. Vorrichtung nach Anspruch 10 oder 11,
wobei die einzelne Einheit eine mobile Telefoneinheit ist, die dazu angepasst ist, durch eine Telefon-Landleitung mit der Gewinnspiel-Quelle verbunden zu sein.

13. Vorrichtung nach Anspruch 10 oder 11,
wobei die einzelne Einheit eine mobile Telefoneinheit ist, die dazu angepasst ist, durch eine Funkverbindung mit der Gewinnspiel-Quelle verbunden zu sein.

14. Vorrichtung nach einem der Ansprüche 9 bis 13,
wobei die elektronische Einheit zum Anzeigen einer gewählten Eintrags-Position oder - Positionen eine "QWERTY"-Tastatur oder eine andere alphabetische Tastatur aufweist.

15. Vorrichtung nach einem der Ansprüche 9 bis 13,
wobei die elektronische Einheit zum Anzeigen einer gewählten Eintrags-Position oder -Positionen eine numerische Tastatur und/oder einen oder mehrere Druckknöpfe zum Steuern eines auf dem Schirm zu sehenden Symbols aufweist.

16. Vorrichtung nach einem der Ansprüche 9 bis 13,
wobei die elektronische Einheit zum Anzeigen einer gewählten Eintrags-Position oder - Positionen einen berührungssensitiven Schirm aufweist.

17. Vorrichtung nach einem der Ansprüche 9 bis 16,
die in einem Auto oder einer anderen Art von Fahrzeug installiert ist.

18. Vorrichtung nach einem der Ansprüche 9 bis 17,
die eine Vorrichtung aufweist zum automatischen Ausführen des Vergleichs der Eintrags-Position(en), die auf der Anzeige ausgewählt wurde(n), mit einer vorbestimmten Position, die einen Gewinn-Eintrag darstellt.

19. Vorrichtung nach einem der Ansprüche 9 bis 18,
die eine Vorrichtung zum Anzeigen des Erfolgs und/oder des Misserfolgs eines Eintrags eines Teilnehmers aufweist.

20. Vorrichtung nach Anspruch 19,
wobei die Vorrichtung zum Anzeigen des Erfolgs und/oder des Misserfolgs eine visuelle und/oder auditive Anzeige wiedergibt.

21. Vorrichtung nach einem der Ansprüche 9 bis 20,
mit einer Vorrichtung zum Setzen einer neuen Gewinnspiel-Runde, nachdem sich ein Eintrag als erfolgreich gezeigt hat.

## Revendications

1. Procédé pour exécuter une compétition sur image, lequel procédé comprend l'émission de l'image depuis un emplacement distant jusqu'à une unité qui comprend un téléphone, un écran d'affichage et des moyens manuels pour introduire électroniquement, sur l'écran d'affichage, une indication d'une ou de positions sélectionnées sur l'écran, et comparer la ou les positions sélectionnées à une position prédéterminée.

2. Procédé selon la revendication 1, selon lequel l'image est transmise à l'unité par des lignes de transmission fixes, auxquelles l'unité est connectée.

3. Procédé selon la revendication 2, selon lequel l'image est transmise à l'unité par l'intermédiaire du réseau Internet.

4. Procédé selon la revendication 1, selon lequel l'image est transmise par radio ou par l'intermédiaire d'une parabole de satellite.

5. Procédé selon la revendication 1, selon lequel l'image est transmise à l'écran au moyen d'un système à fibres optiques ou est transmise numériquement.

6. Procédé selon l'une quelconque des revendications précédentes, selon lequel le dispositif d'affichage est un dispositif d'affichage tridimensionnel.

7. Procédé selon l'une quelconque des revendications 1 à 5, selon lequel le dispositif d'affichage est une image de réalité virtuelle ou une image holographique.

8. Procédé selon l'une quelconque des revendications précédentes, selon lequel l'image transmise est une image mobile.

9. Dispositif pour participer à une compétition sur image selon l'une quelconque des revendications précédente, lequel dispositif comprend un téléphone, un écran d'affichage et des moyens électroniques pour indiquer une ou des positions d'entrée sélectionnées sur le dispositif d'affichage.

10. Dispositif selon la revendication 9, dans lequel le téléphone et les moyens électroniques servant à indiquer une ou des positions d'entrée sélectionnées sont combinés en une seule unité.

11. Dispositif selon la revendication 10, selon lequel ladite unité unique incorpore également ledit écran d'affichage.

12. Dispositif selon la revendication 10 ou la revendication 11, dans lequel ladite unité unique est une unité de téléphone mobile, adaptée pour être reliée à la source de compétition par l'intermédiaire d'une ligne téléphonique terrestre.

13. Dispositif selon la revendication 10 ou la revendication 11, dans laquelle ladite unité unique est une unité de téléphone mobile, adaptée à être reliée par radio à la source de compétition.

14. Dispositif selon l'une quelconque des revendications 9 à 13, dans lequel lesdits moyens électroniques servant à indiquer une ou des positions d'entrée sélectionnées comprennent un clavier QWERTY ou un autre clavier alphabétique.

15. Dispositif selon l'une quelconque des revendications 9 à 13, dans lequel lesdits moyens électroniques servant à indiquer une ou des positions d'entrée sélectionnées comprennent un clavier numérique et/ou un ou plusieurs boutons commandant un symbole vu sur l'écran.

16. Dispositif selon l'une quelconque des revendications 9 à 13, dans lequel lesdits moyens électroniques servant à indiquer une ou des positions d'entrée sélectionnées comprennent un écran tactile.

17. Dispositif selon l'une quelconque des revendications 9 à 16, installé dans une voiture ou dans un autre véhicule.

18. Dispositif selon l'une quelconque des revendications 9 à 17, comportant des moyens pour exécuter automatiquement la comparaison de la ou des positions d'entrée sélectionnées sur le dispositif d'affichage à une position prédéterminée représentant une entrée gagnante.

19. Dispositif selon l'une quelconque des revendications 9 à 18, pourvu de moyens pour indiquer le succès et/ou l'échec d'une entrée d'un compétiteur.

20. Dispositif selon la revendication 19, dans lequel lesdits moyens pour indiquer ledit succès et/ou ledit échec fournissent ladite indication sous forme visuelle et/ou audible.

21. Dispositif selon l'une quelconque des revendications 9 à 20, comprenant des moyens pour créer une nouvelle compétition après qu'une entrée s'est avérée être couronnée de succès.
